# EUROPEAN PATENT APPLICATION

(11) **EP 1 122 435 A1**
(43) Date of publication of application: **08.08.2001**
(21) Application number: 01400006.1
(22) Date of filing: 03.01.2001
(51) Int. Cl.: F04B 43/10, F04B 43/12, F04B 43/113, B65G 35/00

(54) **Conveying device**

(30) Priority: 03.02.2000 JP 2000026820
(71) Applicant: Kabushiki Kaisha Kay & Craft, Ohta-ku, Tokyo (JP)
(72) Inventor: Kawasaki, Sieji, Yokohama-shi, Kanagawa-ken (JP)
(74) Representative: Maillet, Alain

(57) **Abstract**

Conveying device comprising a pipe (1) and a tube (5,105) provided in the pipe (1) having a first end (6A,106A) and a second end (6B,106B) in a longitudinal direction thereof, a fluid supply unit for force-feeding the fluid to a space between the pipe (1) and the tube (5,105A) via a closable valve (21) and a release unit (21A) for releasing the thus force-fed fluid to the outside, said tube (5,105) comprising a crosssectional first part (9) and second part (7), said first part (9) being adapted to collapse onto said second part (7) along a privileged transverse direction, starting from said second end (6B) and progressing toward said first end (6A) when the fluid is force-fed into said space.

## Description

The present invention relates to a conveying device for conveying waste such as garbage, plating liquid mixed with plated products, sludge, chemical agents, and other various kinds of solid materials and liquid. The conveying device of the invention can be used for various apparatus such as medical apparatus, food processing apparatus, and transporting apparatus.

Conventionally, various types of conveying devices have been used for conveying waste including garbage, sludge, chemical agents including solid matters, plating agents together with plated products after a plating process, and other various kinds of solid matters and liquid.

For example, waste such as garbage include relatively high moisture content, particularly those from kitchens are likely to include a variety of things such as disposable chopsticks, spoons, vinyl clothes and metallic solid materials, emitting bad smell.

In Japanese Patent Un-Examined Publication No.53-31373, there is proposed a waste conveying apparatus, in which garbage is crushed to fine pieces, and mixed up with water acting as a conveying medium. The slurry-like crushed garbage can then be conveyed through pipes by a pump.

In Japanese Un-Examined Patent Publication No.54-9464, there are disclosed a continuous conveying system such as a screw conveyer and an intermittent conveying system such as a piston conveyer. Furthermore, in Japanese Un--Examined Patent Publication No.53-80767, there is disclosed a conveying apparatus for conveying garbage, using high speed airflow in a conveyer pipe, where sludge, chemical agents, and plating liquid mixed with plated products, and/or other various kinds of solid material and liquid are conveyed through passages constituted by pipes and the like, these passages being insulated from the outside.

However, a conveying apparatus using conveying pipes or airflow requires a powerful pump when the transportation distance is relatively long. Furthermore, it is very difficult to convey garbage vertically over a long distance e.g. for conveying garbage from kitchens directly to waste disposal machines, or from the waste disposal machines to sorting machines. Piston or screw conveying devices have been used for this purpose. However, these devices involve complicated mechanisms and can be damaged by solid materials such as spoons that may be present in the garbage.

A solution to the latter problem is proposed in Japanese Patent Un-Examined Publication No.3-64682, which discloses a fluid-forced conveying device comprising an elastic inner tube and an outer tube, said outer tube extending along the longitudinal direction at the outer periphery of the inner tube, and said outer tube being divided into a plurality of parts which are expanded by the pressure of the fluid in sequence from the upstream side ofthe conveying direction, thereby compressing the inner tube from the outside and thus force-feeding the fluid in the inner tube. Although the inner tube is squashed by the expansion of the outer tube, such simple squash of the tube does not efficiently feed the fluid in the inner tube.

A further solution is proposed in Japanese Patent Un-Examined Publication No. 10-279005, which discloses a conveying device comprising a pipe, an elastically deformable tube provided in the pipe, said tube having a wall which is thinner at a second end thereofthan at a first end thereof, and release means. A fluid is force-fed into the space between the pipe and the tube via an openable valve and released to the outside by said release means.

According to this prior art, when a fluid carrying waste or garbage is force-fed by a fluid supplying means into the tube made of an elastically deformable material such as rubber, the tube starts contracting from its thinner end, i.e. the second end, thereby pushing the waste toward the thicker end or first end. The tube can then be contracted starting from its first end so as to convey the waste to the second end of a further tube. The space between the pipe and the tube is then put in communication with the outside by the release means, so that the fluid is released due to the elastic restoration force of the tube and the tube resumes its original shape. By connecting a plurality of such pipes, waste are conveyed through the tubes, one after another, whereby they are finally conveyed to a desired place. This prior art enables a variety of objects such as waste, garbage to be conveyed over a long distance while using a small power source. According to this prior art, however, since the entire section of the tube is compressed, a considerable force is required and repeated deformation of the tube affects its durability.

An object of the present invention is to solve the problems set out above. In particular a first object of the invention is to propose a conveying device which achieves a smooth deformation of tubes. A second object of the invention is to propose a conveying device which has excellent durability.

To attain the objects mentioned above, there is proposed a conveying device comprising a pipe and a tube provided in the pipe having a first end and a second end in a longitudinal direction thereof, a fluid supply unit for force-feeding a fluid to a space between the pipe and the tube via a closable valve and a release unit for releasing the thus force-fed fluid to the outside, characterised in that said tube comprising a crosssectional first part and second part, said first part being adapted to collapse onto said second part along a privileged transverse direction, starting from said second end and progressing toward said first end when the fluid is force-fed into said space.

With the above-mentioned structure, when a fluid is force-fed from the fluid supply unit, the collapsible part of the tube is gradually collapsed starting from the thinner second end. The contents ofthe tube are thus pushed out to the first end. The tube is subject to less deformation and less contraction during the gradual collapse and the force required to push out the contents ofthe tube is therefore less important than in the prior art. It should be further noted that when the space between the pipe and the tube is put in communication with the outside after completion of contraction, the collapsible part resumes its original shape due to the elastic restoration force.

The conveying device of the invention comprises also turnovers each being convex toward the inside of the tube, when the fluid force-fed to between the pipe and the tube is released to the outside after the collapsible portion or small semicircular portion is collapsed, the turnovers at both sides elastically resume their respective original shapes that are convex toward the inside of the tube, so that the small semicircular portion can smoothly resume its original shape.

Furthermore, when said small semicircular portion is collapsed toward the inner surface of the larger semicircular portion, there is little contraction or expansion of the latter.

Also, it is possible to make the tube wall progressively thinner while going from the first end to the second end, so that, when the pressure in the pipe rises, the tube starts collapsing at the thinner portion, thus rendering transportation possible by controlling pressure.

According to another aspect of the invention, the cross-section of the tube decreases from the first end to the second end along the longitudinal direction ofthe tube. Thus, when a fluid is force-fed by a fluid supply unit, then the tube starts contracting from the thinner second end, thus pushing out the contents of tube. As the cross-section of the tube gradually decreases, the contraction of the tube takes place promptly at the second end, while effectively developing a force to push out the contents of the tube.

The cross-section of the tube may be substantially ellipse-shaped, the gradual decrease of the cross-section being achieved by gradually decreasing the minor axis of the ellipse. Such an ellipse-shaped tube starts contracting smoothly from the small minor axis end due to the pressure of the fluid, thereby effectively conveying the contents of the tube.

Furthermore, the tube wall may be made thinner by steps from the first end to the second end, while granting a predetermined thickness of the tube wall at the second end. As the tube contracts by steps, each contraction step corresponding to a thickness step ofthe tube wall, effective step-by-step conveying is made possible. In addition, sealing elements may be provided at both ends of the tube so as to ensure air tightness between the pipe and the tube. A plurality of pipes can be connected one to the other, thus enabling transportation over a long distance.

Other objects, features and advantages of the invention will be apparent to those skilled in the art from the following description of the preferred embodiments of the invention, wherein reference is made to the accompanying drawings, of which:
Fig. 1 is a section of a pipe according to a first embodiment ofthe invention;
Fig. 2 is a section of a pipe of the first embodiment ofthe invention, in which a collapsible part has collapsed;
Fig. 3 is a cross-section of a tube taken along the A-A line of Fig. 1, showing the first embodiment of the invention;
Fig. 4 is a cross-section of a tube taken along the B-B line of Fig. 1, showing the first embodiment of the invention;
Fig. 5 is a cross-section of a tube taken along the C-C line of Fig. 1, showing the first embodiment ofthe invention;
Fig. 6 is a longitudinal section of pipes connected in series, showing the first embodiment ofthe invention;
Fig. 7 is a longitudinal section of pipes connected in series, in which a collapsible part of the tube in the first pipe has collapsed, according to the first embodiment of the invention;
Fig. 8 is another longitudinal section of pipes connected in series, in which a pushing head is retreated, while the tubes of first and second pipes are contracted, according to the first embodiment of the invention;
Fig. 9 is another lonbgitudinal section of pipes connected in series, in which the tubes of the second and third pipes are contracted, according to the first embodiment of the invention;
Fig. 10 is a section of a pipe according to a second embodiment of the invention;
Fig. 11 is a section of a tube according to the second embodiment of the invention. Fig. 12 is a view seen from an arrow X-X of Fig. 11, showing the second embodiment of the invention;
Fig. 13 is a view seen from an arrow Y-Y of Fig. 11, showing the second embodiment of the invention;
Fig. 14 is a block diagram, showing a third embodiment ofthe invention;
Fig. 15 is a section of a conveying device in accordance with a fourth embodiment of the invention;
Fig. 16 is a longitudinal section of a conveying device in accordance with the fourth embodiment of the invention;
Fig. 17 is a side view showing the tube ofthe conveying device in accordance with the fourth embodiment of the invention;
Fig. 18 is a section of the contracted tube of the conveying device, in accordance with the fourth embodiment of the invention.
Fig. 19 is another section of a conveying device in accordance with a fifth embodiment of the invention;
Fig. 20 is a longitudinal section of a conveying device in accordance with the fifth embodiment ofthe invention.
Fig. 21 is a cross-section of the conveying device in accordance with a sixth embodiment of the invention.

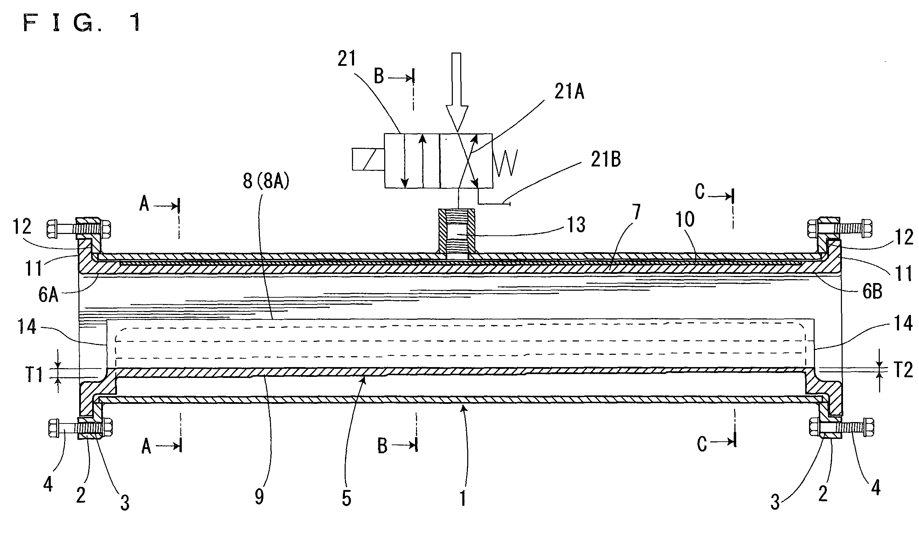

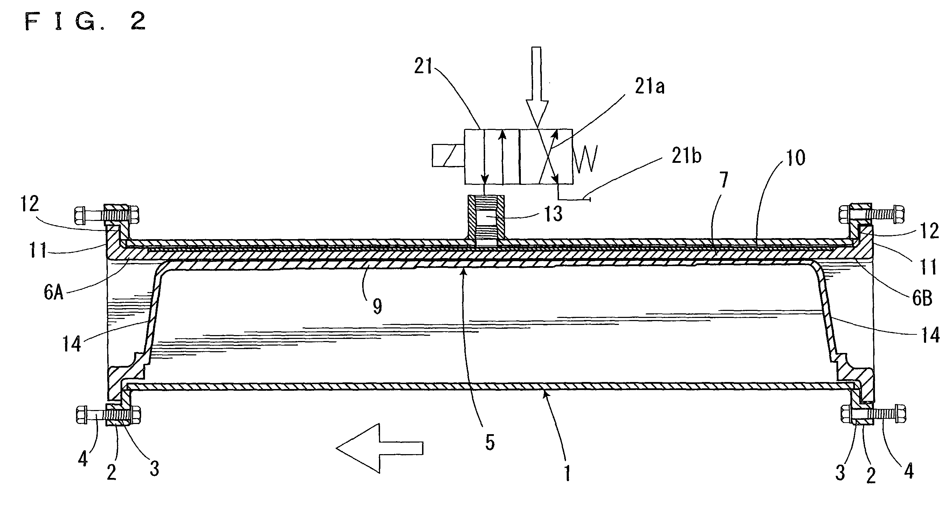

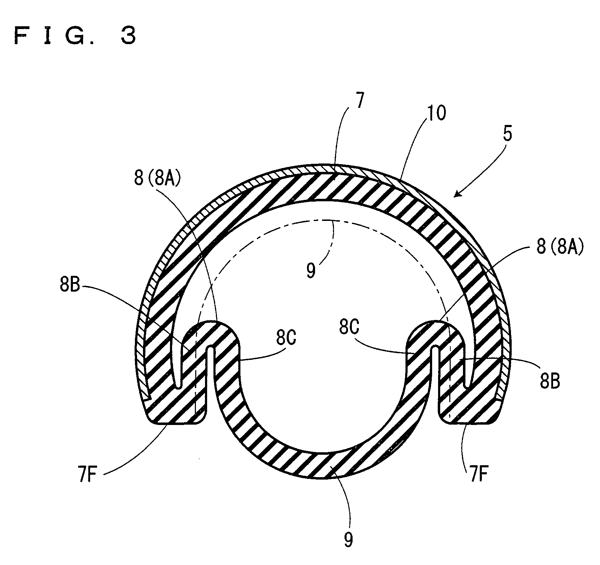

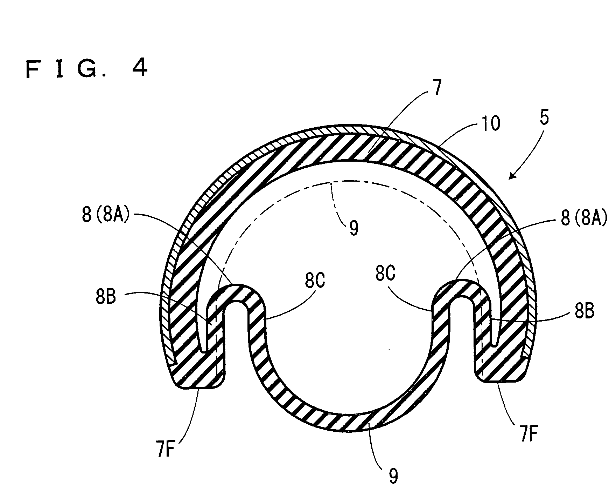

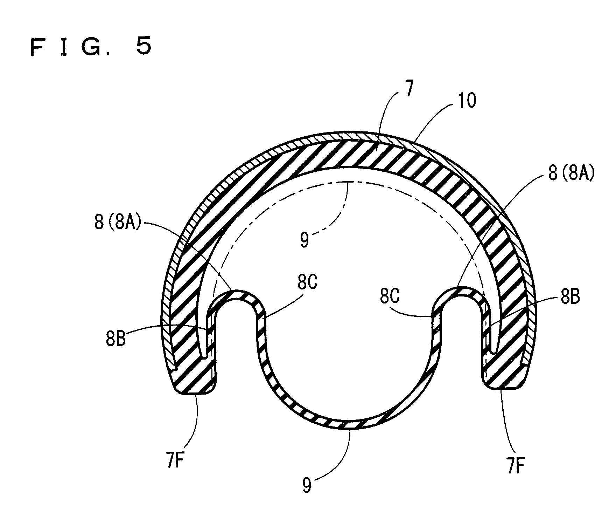

Figs. 1 through 9 show a first embodiment of the invention. Reference numeral 1 designates a pipe provided at both ends with joints e.g. flanges 2, each flange 2 being provided with a plurality of openings 3 through which they are connected by tightening elements 4 such as bolts and nuts. A tube 5 is provided inside of the pipe 1, said tube 5 extending along the longitudinal axis of the pipe. The tube 5 is made of an elastic material such as rubber and exhibits a gradually decreasing thickness from the first end to the second end. In other words, the thickness ofthe wall oftube 5 is smaller at 6B ride than at 6A (T2<T1) and smaller at 6C than at 6B. The tube according to this embodiment is a straight and may gradually contract along its axial direction by five steps. As illustrated in the cross-sectional views of Figs. 3 to 5, the section of the tube 5 is symmetric and comprises a semicircular portion 7 of substantially semicircle cross-section, said semicircular portion 7 being slightly larger than a precise semicircle and being provided with turnovers 8 at both ends 7F, the convexity of each turnover facing the interior of the tube 5. Between the two turnovers 8 is provided a collapsible portion also said small semicircular portion 9 which connects the turnovers 9 together. Said small semicircular portion 9 is substantially semicircle-shaped and smaller than said semicircular portion 7 (hence the designation small circular portion. The wall of said small semicircular portion is thin enough to easily collapse. The turnovers 8 comprise bent portions designated of by reference 8A and straight portions 8B and 8C at each side of the bent portions, the straight portion 8B connecting the bent portion 8A to one of said ends 7F, while the other straight portion 8C connects the bend portion 8A to said small semicircular portion 9.

As can be seen from Figs. 3 to 5, the thickness of each turnover 8 is substantially the same as the one of small semicircular portion 9. Furthermore, the length of the inner periphery of said semicircular portion 7, opposite to the said bent portions 8A, is substantially the same as the sum of the respective lengths of the straight portions 8C and the small circular portion 9 provided between both portions 8A. Accordingly, the said semicircular portion 9 is subject to little expansion and contraction, when it is collapses onto the inner surface of the semicircular portion 7. In the present embodiment, the respective thickness of the turnovers 8, curves 8A and small semicircular portion 9 is gradually decreased, through five decreasing steps, while going from the first end to the second end. However, it should be noted that the inner dimensions of the tube remain the same from one end through the other, the thickness variations being ensured by varying the outer dimension of the tube.

The outer periphery of the semicircular portion 7A is integrally formed with a shape retaining member 10, using an insert molding. For the shape retaining member 10, SPCC plate (ordinary cold rolled steel plate) or the like may be used. Alternatively, the shape retaining member 10 is not necessarily present if the tube 5 is short, since the thickness of the semicircular portion 7 is greater than that of the small semicircular portion 9. As the semicircular portion 7 does not need to be deformed, it may be made of a hard material.

Both ends of tube 5 are integrally formed with a collar-shaped sealing portion 11, while the inner surface of said flange 2 is formed with a ring-shaped pressing portion 12 for pressingly contacting the outer surface of the sealing portion 11. The inner surface of the pressing portion 12 is spaced a certain distance away from the inner surface of the flange 2, said distance being smaller than the thickness of the sealing portion 11. The outer surface ofthe sealing portion 11 may be bonded to the inner surface ofthe flange 2 where it is necessary.

For the material of the tube 5, it is desirable to use fluorine-based rubber with good anti-oxidation anti-alkalization properties as well as good heat resistance. The pipe 1 is formed with communication holes 13 making communicate the inner surface of the pipe 1 with the outer surface of the tube 5. Incidentally, the outer end faces at the first end 6A and the second end 6B of the smaller semicircular portion 9 are closed by a wall 14.

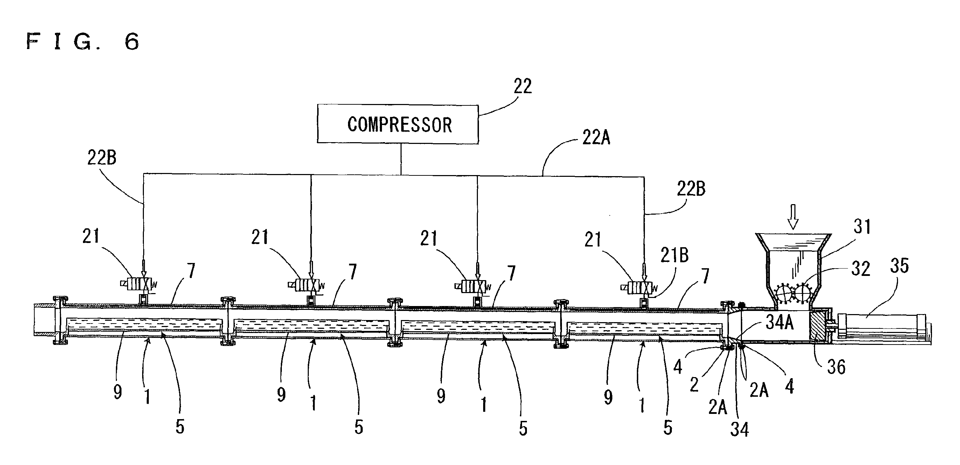

A fluid supply means or compressor 22 is connected to the communication hole 13 of the pipe 1 via an electromagnetic valve 21. The electromagnetic valve 21 and the compressor 22 are each controlled by control means (not shown). In the present embodiment, the electromagnetic valve 21 is provided with a valve opening means 21a. A plurality of the pipes 1 are connected together by flanges 2, the respective first ends thereof being located downstream according to the garbage conveying direction. As illustrated in Fig.6, the compressor 22 is connected to the respective electromagnetic valves 21 through a main duct 22A and branch ducts 22B.

As can been seen from Fig. 6, a hopper 31 is provided adjacent to an inlet of garbage, said hopper 31 comprising a crusher 32. The lower part of the hopper 31 communicates with an inlet pipe 33 at the garbage inlet side, said inlet pipe 33 being provided at one end with a flange 2A. The first end ofthe garbage inlet pipe 33 is connected to the second end of pipe 1 by a connection pipe 34, said connection pipe 34 being provided with flanges 2A at both ends. The other end of the garbage inlet pipe 33 is provided with a cylinder 35 serving as a reciprocal drive means, said cylinder 35 having a telescopic rod provided at its tip end with a pushing head 36. The pushing head 36 is allowed to move reciprocally within the garbage inlet pipe 33 and is shaped so as to fit into a tapered receiving base 34A provided in the connection pipe 34. If the waste to be conveyed are sludge, chemical agent, plating liquid mixed with plating products, or various other kinds of solid matters and liquid which do not need crushing, then said crusher 32 may be replaced by an openable cover or a valve.

Next, the action of the above described device will be explained. For simplicity, the pipes 1 and valves 21 are numbered from the connection pipe 34 to the left in ascending order, such as the lrst pipe 1, the 2nd pipe 1, etc., and the 1rst electromagnetic valve 21, the 2nd electromagnetic valve 21, etc.

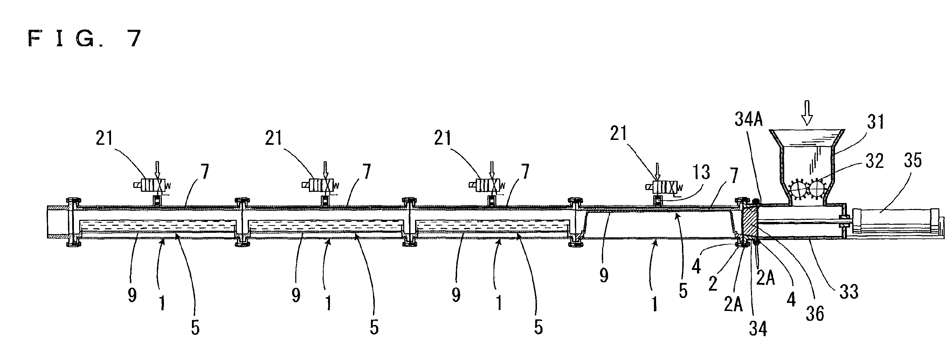

The garbage supplied from the hopper 31 is crushed by the crushing machine 32 and fed into the inlet pipe 33. As shown in Fig. 7, the pushing head 36 is allowed to advance to a first end by the translation of the cylinder 35, so that the garbage is fed into the 1st pipe 1 until the pushing head 36 fits into the receiving base 34A and stops there. The compressor 22 is then actuated so that the 1rst electromagnetic valve 21 is opened by the control means, thereby making the compressor 22 communicate with the communication hole 13, as illustrated in Figs. 6 and 7. Consequently, a fluid such as a liquid or compressed air is supplied by the compressor 22 to the inside of the 1rst pipe 1 and thus the small semicircular portion 9 of the tube 5 collapses onto the inner surface of the semicircular portion 7. When collapsing, the small semicircular portion 9 of the tube 5 starts its collapsing motion from the thinner second end 6B, thereby pushing the garbage to the first end of the tube. When small semicircular portion 9 has collapsed all along tube 5 and is in contact with the inner surface of the semicircular portion 7, the 2nd pipe 1 is fed with the garbage.

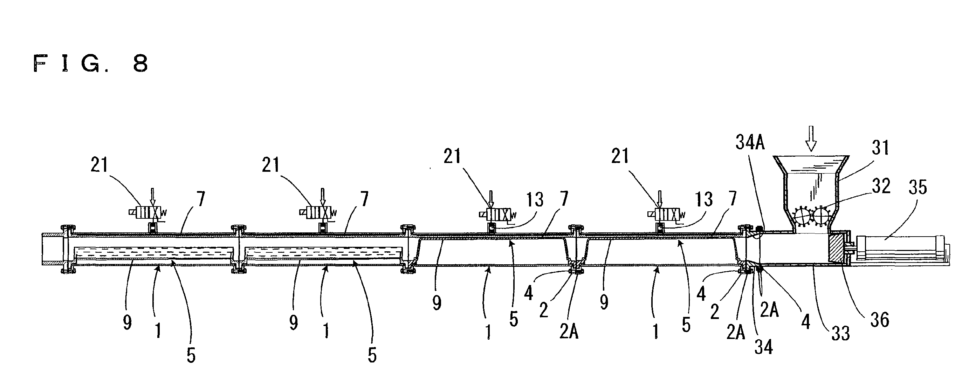

After the small semicircular portion 9 of the 1rst pipe 1 has collapsed, the pushing head 36 is retreated as shown in Fig. 8. Subsequently, the 2nd electromagnetic valve 21 is made open so that compressed air/ liquid is supplied from compressor 22, thereby making the small semicircular portion 9 of the 2nd pipe 1 collapse and pushing the garbage into the 3rd pipe 1. After collapse of the small semicircular portion 9 of the 2nd pipe I, the 3rd electromagnetic valve 21 is made open, thereby making the small semicircular portion 9 of the 3rd pipe 1 collapse from the second end 6B. By repeating these steps, the garbage is fed from a second end of a pipe to the first end of the next one, sequentially.

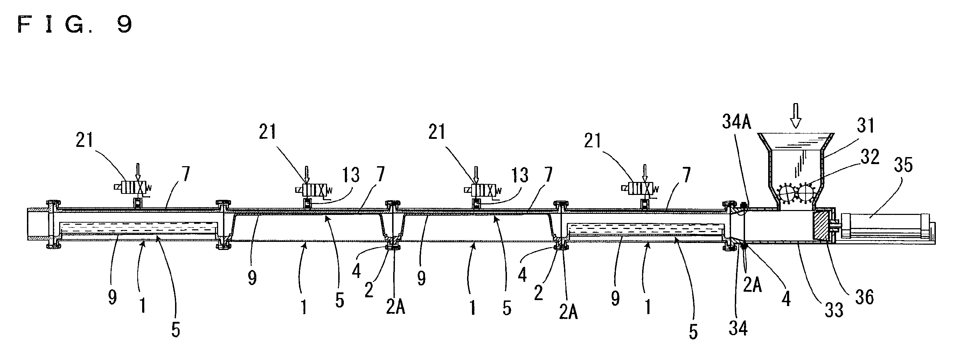

Next, after the small semicircular portion 9 of the 3rd pipe has fully collapsed, the control means actuates the 1rst electromagnetic valve 21, so as to allow the communication hole 13 to communicate with release means 21A. The air/liquid between the pipe 1 and the tube 5 is then released to the outside. By releasing the air/liquid, the small semicircular portion 9 of the tube 5 in the 1rst pipe 1 resumes its original state due to elastic restoration force, as illustrated in Fig. 9 and the air/liquid between the 1rst pipe 1 and the tube 5 is discharged. The pushing head 36 urges, in cooperation with the elastic restoration force, new garbage into the 1rst pipe 1. The introduction of new garbage helps restoring the original shape of the small semicircular portion 9 of the 1rst pipe 1. Next, the compressor 22 is shut off from the communication hole 13 by a shut-off unit 21B, whereby the electromagnetic valve 21 is closed.

In the state illustrated in Fig. 9, the garbage has already been fed into the 4th pipe 1, and each semicircular portion 9 of the tubes 5 of the 2nd and 3rd pipes 1 has collapsed, whereby new garbage can be fed into the tube 5 of the 1rst pipe 1, by using the pusher head 36. Alternatively, in the state illustrated in Fig. 8, the garbage may be fed into the 1rst pipe, using the pushing head 36, either prior to or simultaneously with the collapse ofthe small semicircular portion 9 ofthe 3rd pipe 1, with only the small semicircular portion 9 of the 2nd pipe 1 being contracted while the small semicircular portion 9 of the 1rst pipe 1 being restored to its original state.

The release means 21A may be connected with an external duct means consisting for example of the main duct 22A, branch ducts 22B and the like (not shown), through a non-return valve, said non-return valve allowing a fluid to flow only in a one direction from the release means 21A toward the external duct means. When proceeding from the state of Fig. 8 to the state of Fig. 9, the 1st electromagnetic valve 21 is first actuated to allow the communication hole to communicate with the release means 21A side, then the liquid/compressed air between the 1rst pipe 1 and the tube 5 is allowed to flow into the duct, while the 3rd electromagnetic valve 21 is made open and liquid/ compressed air is supplied from the compressor 22. The liquid/compressed air of the 1rst pipe 1 is fed through the said duct means to the 3rd pipe 1, thereby making collapse the small semicircular portion 9 of the 3rd pipe 1. In this way, the liquid/air pressure caused by a liquid/air release in one of the pipes 1 can be used for making the semicircular portion 9 of another pipe 1 collapse, whereby a small loss of dynamic energy results. Therefore a small-size compressor 22 can be used and the garbage can be carried at low power.

Referring back to the connection of pipes 1, when the flanges 2 are coupled together with the tightening elements 4, the sealing portions 11 between the flanges 2 are in close contact to each other. Since the sealing portions 11 are clamped by the pressing portions 12 provided at both sides, a sealing effect is ensured. Furthermore, when the sealing portions 11 are in close contact to each other, the sealing portions 11 are in pressingly contact with the pressing portions 12, and liquid/air tightness between the pipe 1 and the tube 5 is ensured. When flanges 2 are coupled, the sealing portions 11 are pressed against flanges 2. Accordingly, it is not always necessary to bond the sealing portions 11 to the flanges 2.

As it is apparent from the foregoing, when the liquid/air is force-fed by the compressor 22, the small semicircular portion 9 made collapsing, from second 6B to first end 6A, and thus pushing the garbage into the next tube 5, whereby the garbage can be conveyed. Next, the space between the pipe 1 and the tube 5 is put in communication to the outside by release means 21 and the garbage is force-fed from the preceding pipe to the second end 6B. The liquid/air is discharged due to the elastic restoration force of the semicircular portion 9 and to the garbage that was force fed from the preceding pipe to the second end B. As a result, the tube 5 is restored to its original shape and ready for conveying new garbage.

Since the tube 5 is elastically deformed by the pressure of liquid/air to convey garbage, a large-sized power source is not necessary even for long distance transportation. Even if the garbage contains mixed metallic solid matters such as spoons etc. the latter can be smoothly carried. Furthermore, it is possible to carry garbage not only in the horizontal direction but also in the vertical direction. In such instance, the garbage is pushed upward by making sequenially collapse the small semicircular portions 9. Since the deformation of tube 5 requires relatively little energy, it is possible to obtain a very effective contraction of the tube which can push the garbage upward.

The tube 5 of the present embodiment exhibits two cross-sectional parts, one being the nearly semicircular portion 7 and the other comprising the collapsible portion (or smaller semicircular) portion 9. The respective ends of portion 7 are connected to the ends of portion 9 via the turnovers 8 each exhibiting a convexity toward the inside of the tube. If the fluid force-fed between pipe 1 and tube 5 is discharged, then turnovers 8 on both sides elastically resume their original positions and allow the small semicircular portion 9 to be smoothly resume its original shape.

As the inner dimension of the semicircular portion 7 above the line joining the points where the portions 8A are bent is approximately equal to the outer dimension of the small semicircular portion 9 defined between the same points, the latter portion fits into the former whithout generating contraints. In the collapsed position, the inner surface of semicircular portion 9 lies on the inner surface of the semicircular portion 7. In particular, semicircular portion 9 is subject to little expansion and contraction during the collapse / restore action. The low radial contraints improve the durability of the tube 5.

As the thickness of the semicircular portion 9 is decreased by steps from the first end 6A to the second end 6B, the tube 5 is easy to manufacture.

Furthermore, as the semicircular portion 7 is provided with a shape retaining member 10, the deformation of the semicircular portion 9 can be prevented even if a relatively long tube is used. As the shape retaining member 10 is formed integrally, using insert molding, it is also easy to manufacture. When such shape retaining member is provided, relatively long tubes 5 can be envisaged. When flanges 2 are coupled together with the tightening elements 4, the sealing portions 11 are in pressing contact with each other as well as with the pressing portions 12 of flanges 2. Therefore, moisture is prevented and bad smell from the garbage cannot leak out.

As the inner surface of the pipe 1 is not in contact with the garbage due to tube 5, a high durability of the pipe 1 is ensured. Furthermore, as the thickness of tube 5 is adjusted by varying the outer radius of the small semicircular portion 9, the cross-section of the tube is kept constant all over its length. The inner surface of tube 5 is thus straight and the garbage can hardly remain stuck thereto.

As the inner surface of flange 2 is formed with the ring-shaped pressing portion 12 which contacts the inner surface of the sealing portion 11, a reliable sealing structure is ensured when the flanges 2 are joined. The closeable valve 21 used with the release means 21A is advantageously an electromagnetic valve. A single electromagnetic valve suffices for the operations related to the compressor 22, the shut off operations, and the releasing operations. In addition, as the compressor 22 can be simply connected to each pipe 1 through the main duct 22A and its branches 22B, it is easy to distribute the respective pipes.

Hereinafter will be described other embodiments ofthe invention, in which the same parts as those described in the foregoing embodiment will be designated by the same reference numerals, and their detailed descriptions will not be repeated.

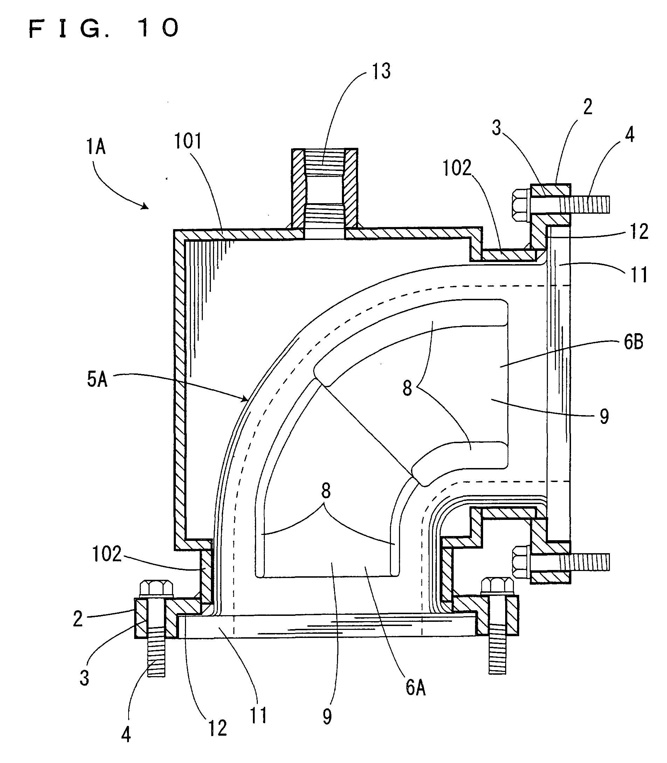

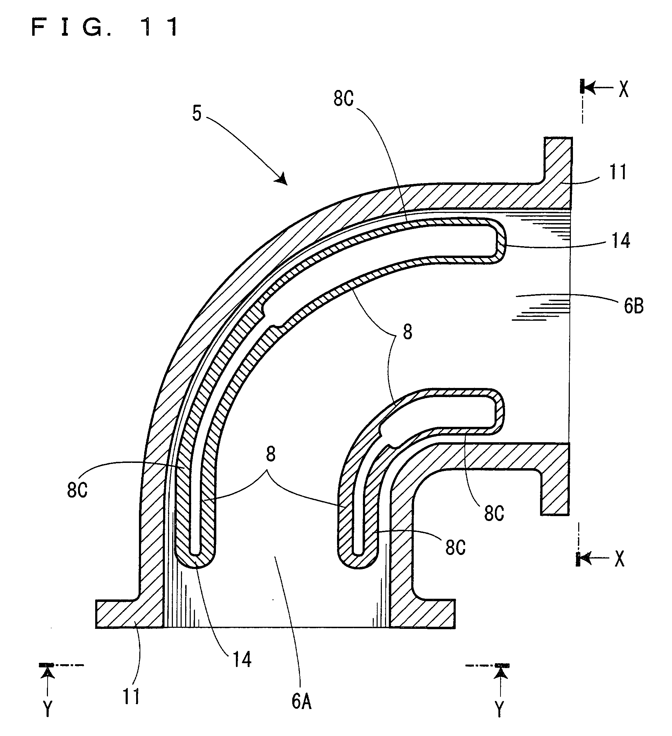

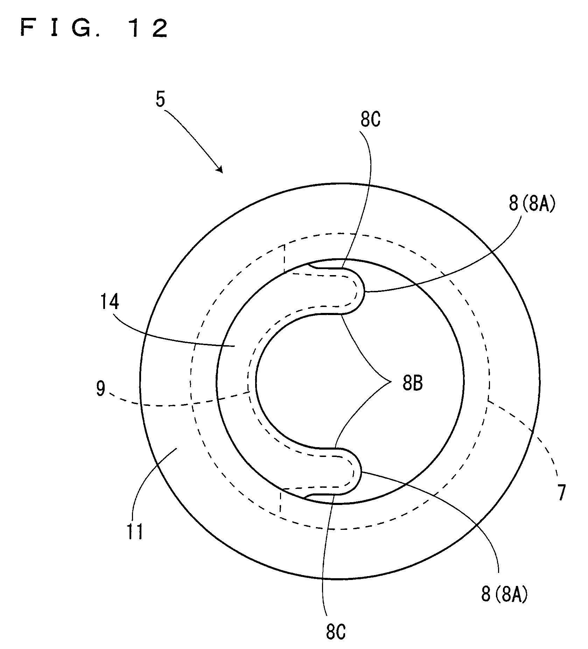

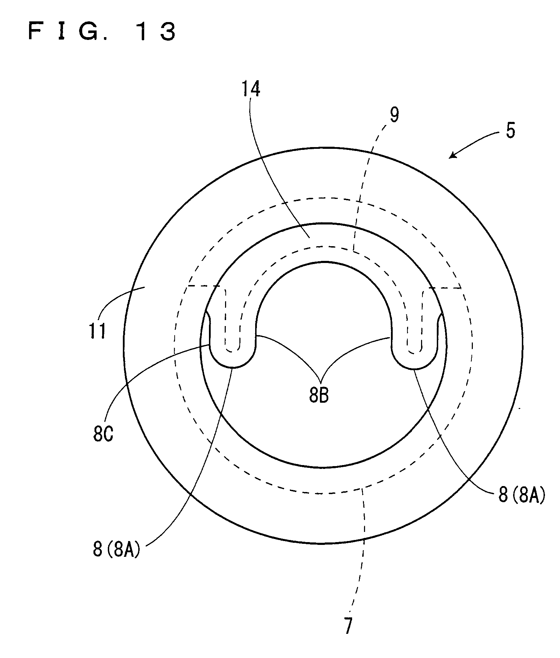

Figs. 10 to 13 show a second embodiment of the invention. A pipe 1A is provided with flanges 2 disposed orthogonally to each other. Inside pipe 1A is arranged a curved tube 5A which has the same structure as that of aforesaid tube 5 except that it is bent at nearly 90 degrees. As can be seen from Figs. 10 and 11, the thickness of the small semicircular portion 9 of tube 5A varies in two steps. In this embodiment, the semicircular portion 9 may be provided either above or under the plane including the centerline ofthe tube 5. The pipe 1A comprises two short pipes 102 provided at both ends of casing 101. A flange 2 is provided on each short pipe 102.

When compressed air/liquid is supplied by the compressor 22 to the space between the pipe 1A and the tube 5A, the small semicircular portion 9 at the second end 6B of tube 5A starts collapsing, thus pushing the garbage toward the first end 6A. Then, the small semicircular portion 9 at the first end 6A starts collapsing, thereby conveying the garbage by pushing the garbage upwardly. Thus, the conveying device of the embodiment enables the garbage to be carried upwards. It should be noted that this system of transportation in a curved pipe requires less energy as compared to the transportation by an air flow.

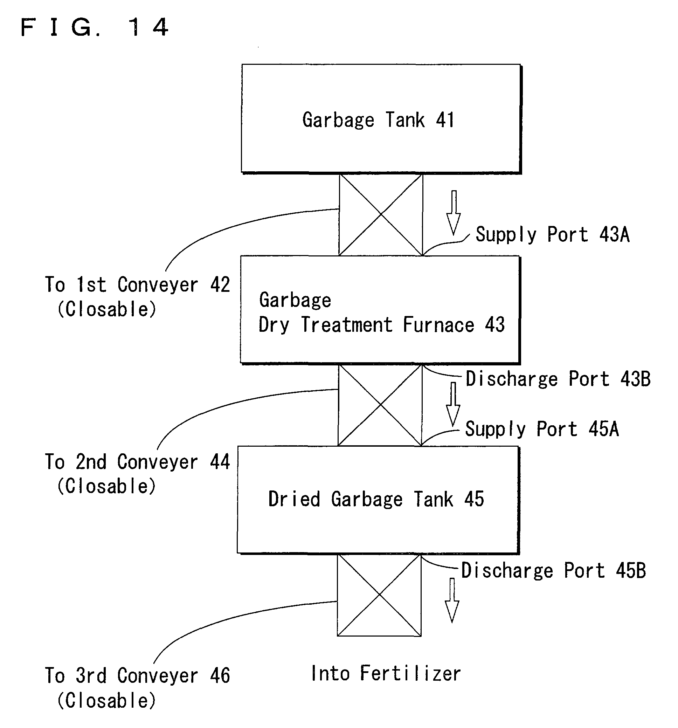

Fig. 14 shows a third embodiment of the invention, in which a conveying device of the invention is applied to a garbage heat treatment furnace. As shown in Fig. 14, reference numeral 41 designates a garbage tank. The garbage tank 41 communicates via a first conveying device 42 with a supply port 43A of a garbage drying treatment furnace 43 of the decompression heating type. A discharge port 43B of the garbage drying treatment furnace 43 is connected to a second conveying device 44, which communicates with a supply port 45A of a dried garbage tank 45. A discharge port 45B of the dried garbage tank 45 is connected to a third conveying device 46.

It should be noted that under the aforesaid garbage treatment system, the inside of the garbage drying treatment furnace 43 must be kept decompressed and heated at high temperature. Accordingly, if garbage is supplied into the furnace 43 with the furnace 43 being opened, then, the inside of the furnace 43 would return to a normal pressure and the temperature therein would decrease, so that it would be necessary to decompress and heat over again, thus leading to a drop of the efficiency.

A solution to the above problem is to control the timing for the opening and closing of the first to third conveying devices 42, 44 and 46, to thereby enable the aforesaid decompression and temperature decrease to be reduced to a minimum. More specifically, when supplying garbage to the garbage drying treatment furnace 43, the first conveying device 42 is opened, while the second and third conveying devices 44 and 46 are closed. Then, garbage is forcefully fed from the first conveying device 42. At that time, as the tube 5 feeds garbage forcefully with the small semicircular portion 9 being in close contact with the inner surface of the semicircular portion 7, the transfer of temperature and the flow of air into the first conveying device 42 are minimal. Subsequently, after the treatment of garbage in the garbage drying treatment furnace 43 is completed, the treated garbage is forcefully fed to the dried garbage treatment tank 45 with the second conveying device 44 being opened, while the 1rst and 3rd conveying devices 42 and 46 being closed. When the amount of garbage in the dried garbage treatment tank 45 reaches a predetermined level, it may be discharged by opening the third conveying device 46 while the first and second conveying devices 42 and 44 are kept closed.

As apparent from the foregoing, as the conveying device according to the invention transports garbage and the like by force-feed system, in such a manner that the tube 5 pushes forward the garbage with the small semicircular portion 9 collpsing onto the inner surface ofthe semicircular portion 7, excellent air tightness results. Therefore, the conveying device according to the invention is suitable for intermittent supply of materials to a high-temperature/high-pressure (decompression) furnace and the like.

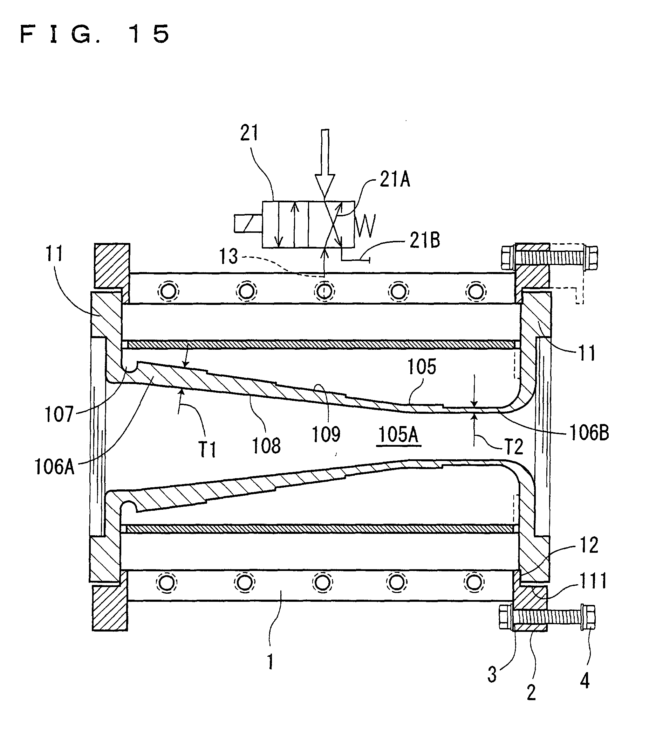

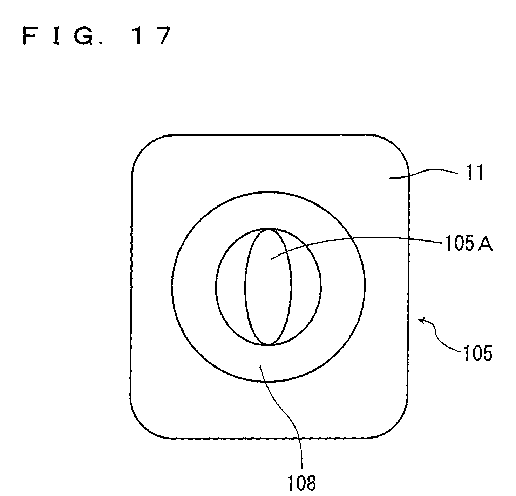

Figs. 15 to 18 show a fifth embodiment of the invention. Reference numeral 105 designates a tube provided in the aforesaid pipe 1. This tube 105 is made of an elastic material such as rubber. As illustrated in Figs. 15 through 17, the thickness of tube 105 gradually decreases from a first end to a second end along the longitudinal direction of the pipe 1. In other words, the thickness T2 of the tube 105 defined at the second end 106B is smaller than the thickness T1 of the tube 105 defined at the first side 106A. Furthermore, a groove 107 is provided at the periphery of an edge of the first end 6A of the tube 105. As can be seen from Fig. 17, the opening 105A defined by the section ofthe tube 105 is substantially ellipse shaped, the longer axis of the ellipse being aligned with the vertical direction. It is important to note that the longer axis divides the tube wall into two halves which collapse one onto the other when the pressure on the tube rises. The length of minor axis ofthe ellipse decreases from the first end to the second end along the longitudinal direction, thereby gradually decreasing the area of the opening. Preferably, the wall of tube 105 is tapered so that the wall is thinner at a second end 106B than at a first end 106A, as illustrated in the section view of Fig. 15. The tube ies preferably made of a fluorine-based rubber that exhibits excellent resistance against acid, alkaline, and heat.

Each end of the tube 105 is integrally formed with a collar-like sealing portion 11, while the flange 2 ofthe pipe 1 is formed with the ring-shaped receiving groove 10 for receiving the sealing portions 11. The bottom surface ofthe receiving groove 10 is the pressing portion 12 that contacts the said sealing portion 11. Where necessary, the outer surface of the sealing portion 11 may be bonded to the inner surface of the flange 2. The pipe 1 is provided with communication holes 13 that communicate with the space between the inner surface of the pipe 1 and the outer surface 109 of the tube 105

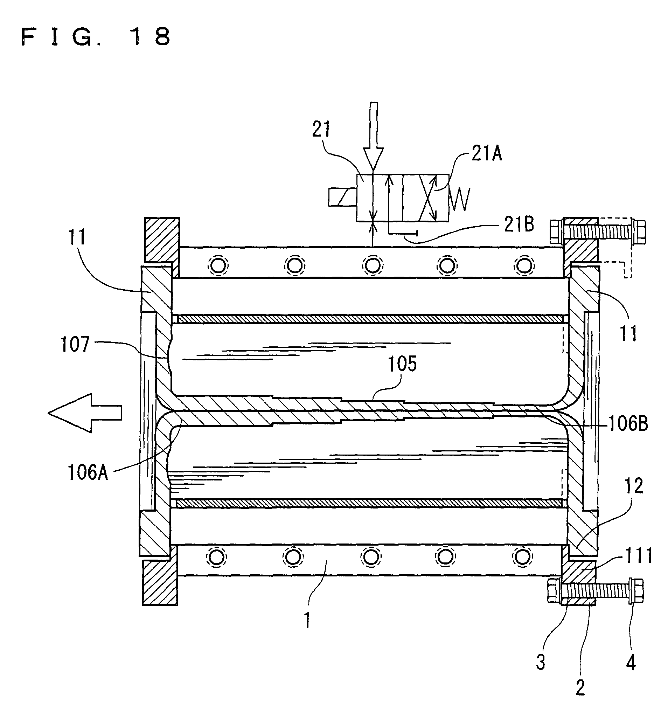

The control means opens the first electromagnetic valve 21A, so that the compressor 22 is allowed to communicate with the holes 13 and to supply compressed air/liquid into the first pipe 1A. The tube 105 contracts under the effect of pressure. Since the tube 105 has a larger section at the first end 106A than at a second end 106B and tapers from said first end to send second end, it starts to contract, in the direction of the short axis of the ellipse, starting from the first end 106A and progressing toward the second end 106B. During contraction, the garbage inside the tube is pushed toward the first end. When tube 105 is contracted over its whole length, the opposite inner surfaces 108 ofthe tube 105 are collapsed one onto the other and therefore in close contact, as illustrated in Fig. 18. As the wall of tube 105 is tapered, a force is efficiently developped in the axial direction illustrated by an arrow on Fig. 18.

Furthermore, according to this embodiment, as the opening 105A of the tube 105 gradually decreases from the first end to the second end along the longitudinal direction, the tube 105 starts to contract from the second end thereby pushing the garbage toward the first end. As the area of the opening 105A of the tube gradually decreases from the first end to the second end along the longitudinal direction, the tube 105 promptly contracts under the effect of pressure and generates an effective force to push the garbage toward the first end. After the garbage has been successfully pushed out, the release means 21 puts the space between the pipe 1 and the tube 105 in communication with the outside. The air/liquid is discharged due to the elastic restoration force of tube 105 which also contributes to feeding the second end with new garbage. As new garbage is fed into the second end of the tube, the latter returns to its original shape more efficiently. Accordingly, even for long-distance transportation, no large-sized power source is necessary, and smooth transportation is realized even if metallic foreign matters such as spoons get mixed in the garbage. It should be further noted that since the transportation according to the invention is obtained by the elastic deformation of a tube under the pressure of air/liquid, it is made possible in any direction, in particular in the vertical direction.

Furthermore, the opening 105A defined by the section of the tube 105 is substantially ellipse-shaped. The minor axis of the ellipse becomes shorter and the area of the opening decreases accordingly when moving from the first end to the second end of the tube. When air/liquid is fed by compressor 22, the increase of pressure within the pipe induces a smooth contraction ofthe oval tube 105 along its minor axis. The wall thickness of tube 105 gradually decreases from the first end 106A toward the second end 106B. The tube can be thinned even if it adopts of various shapes such as an oval shape. The varying thickness of the tube wall also contribute to the gradual c thus ensuring an effective step-by-step transportation of garbage.

Additionally, as both ends of the pipe 1 are formed with flanges 2 serving as joints and as sealing portions 11 are disposed on the inner surface of both flanges 2, it is possible to connect a plurality ofthe said pipes in series. More specifically, since a sealing portion 11 provided at both ends, air tightness between the pipe 1 and the tube 105 is ensured, thus allowing long distance transportation.

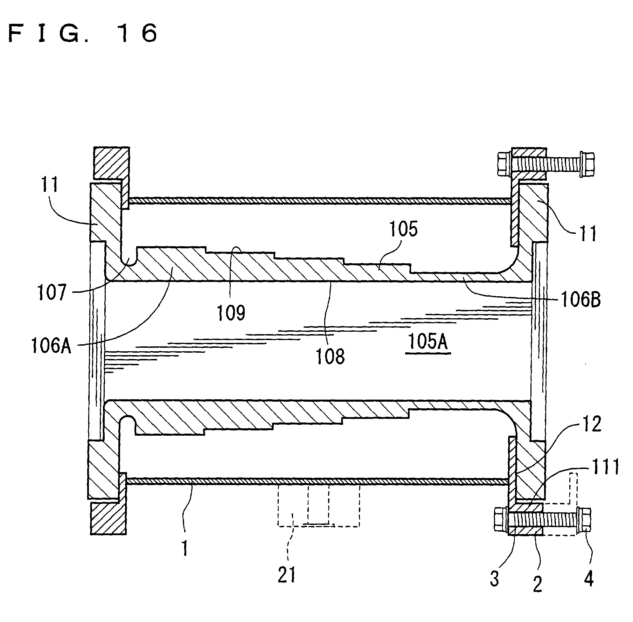

In addition, the periphery of the first end 106A of the tube 105 is provided with a groove 107, which prevents the sealing portion 11 to expand excessively when the tube 105 contracts. As can be seen from a comparison of Figs. 16 and 18, the groove 107 serves indeed as a kind of fulcrum or support point during the contraction phase. Therefore, the air tightness is maintain even during the contraction phase.

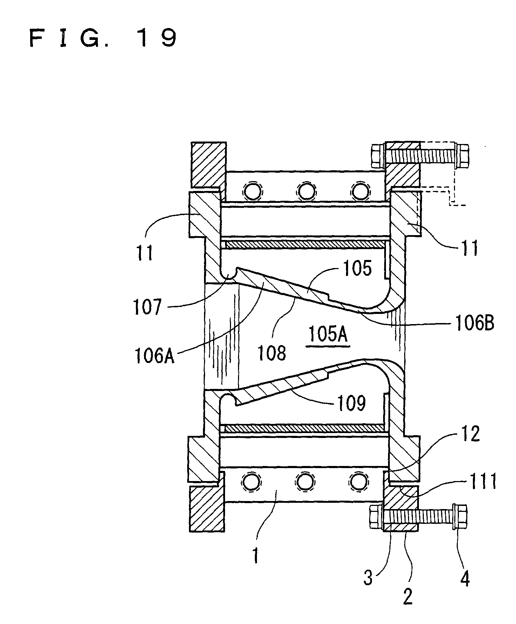

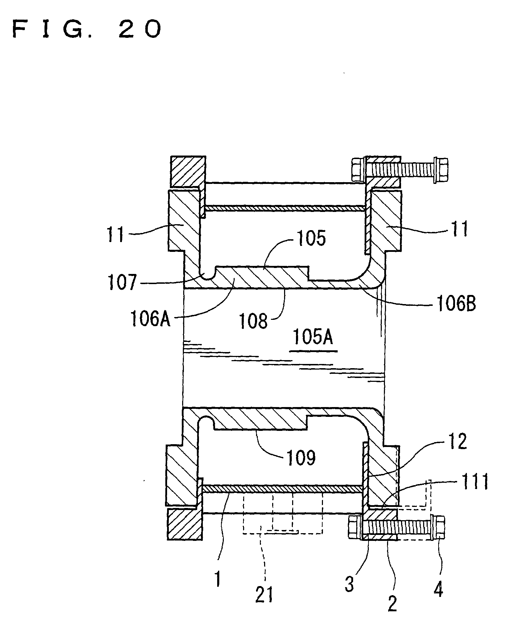

Figs. 19 and 20 show a fifth embodiment of the invention. The pipe 1 of this embodiment is shorter than in the previous one. The opening 105A of tube 105 is still substantially ellipse-shaped and its minor axis gradually decreases. The tube wall becomes thinner by two steps, i.e. it exhibits a thick first end 106A and a thin second end 106B. As such, the conveying device of the invention allows the length of the pipe 1 to be varied at will, thus making it possible to meet needs for transportation of varying distances, by the combination of pipes of various lengths, e.g. the pipe 1 of the first embodiment. Of course, the thickness of the tube 105 may vary by two or more steps, depending upon the length of the tube 105.

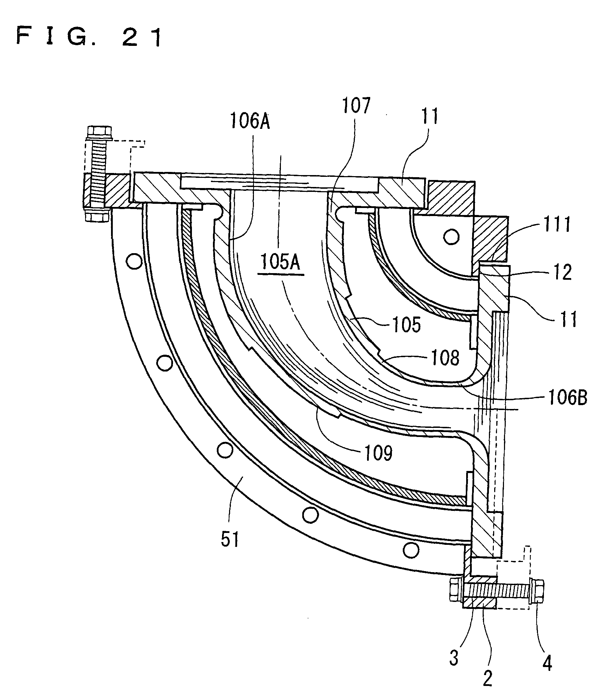

Fig. 21 shows a sixth embodiment of the invention. There is illustrated a bent pipe 51 and a bent tube 105 provided thereinside. The tube 105 has the same structure as in the fourth embodiment except that it is bent.

When e.g. compressed air is supplied by the compressor 22 to the space between the pipe 51 and the tube 105, the latter begins to contract starting from the second end, thus pushing garbage toward the first end. Thereafter the first end also contracts, thereby carrying the garbage upwards.

As described above, the conveying device of the invention enables garbage to be conveyed upwards. Further, as the pressure of air contracts the tube 105 whatever its direction, there is no such loss of energy in curved portions as in airflow transportation systems. Thus, garbage can be conveyed very effectively.

It should be noted that the above-mentioned conveying device ofthe invention allows the tube made of an elastic material such as rubber to contract until it is completely close. Because of the resulting air tightness in the contraction state , the conveying device of the invention is suitable for conveying garbage to a garbage drying treatment furnace.

As will be apparent to the man skilled in the art although some of the embodiments propose to use air, other fluids such as water may be used. Similarly, various types of coupling means such as male-female coupling, may be used for coupling the adjacent pipes in the first and second aspects of the invention, Furthermore, a closable valve may be provided between the pipe and the fluid supply means, while another closable valve may be provided as the separate release means.

Also, if the compressor is stopped after force-feeding the compressed air from the compressor to the space between the pipe and the tube, then the pressure of air drops. Accordingly, the release means may be provided at the compressor side. The conveying device of the invention is suitable for conveying any material including moisture content, they should not be limited to waste such as garbage, sludge, sand with water, chemical products such as chemical agents, plating liquid mixed with plated products, but other various kinds of solid matters and liquid, and even slurry may be conveyed by the device ofthe invention. The aforesaid pushing head may be provided with a non-return valve in the longitudinal direction thereof.

In addition, the conveying device of the invention may be used as nursing apparatus or medical apparatus. As nursing apparatus, the device of the invention may be used for carrying excrements in an excrement disposal system. As medical apparatus, the device of the invention may be used for conveying medical agents, medical wastes, blood and the like. It should be noted that the invention can also be used as artificial blood vessel for artificially conveying blood. When used in such an application, the outside pipe should be flexible but little expansive. The device ofthe invention can also be used in the field of shipping e.g. for conveying various loads, even for conveying of goods in ducts floating on the sea or water using floats. As an example, a tanker loaded with oil may be equipped with the conveying device ofthe invention. Also, for food processing machines, the device of the invention may be used for conveying liquid or oil used for processing food.

## Claims

1. Conveying device comprising a pipe (1) and a tube (5,105) provided in the pipe (1) having a first end (6A,106A) and a second end (6B,106B) in a longitudinal direction thereof, a fluid supply unit (22) for force-feeding the fluid to a space between the pipe (1) and the tube (5,105A) via a closable valve (21) and a release unit (21A) for releasing the thus force-fed fluid to the outside, characterised in that said tube (5,105) comprises a crosssectional first part and second part, said first part being adapted to collapse onto said second part along a privileged transverse direction, starting from said second end and progressing toward said first end when the fluid is force-fed into said space.

2. Conveying device according to claim 1, characterised in that said first part (9) is collapsible and said second part (7) is not collapsible, said first part having an inner surface which comes into contact with the inner surface of said second part when collapsed, said collapsible part (9) being thinner at the second end (6B) than at the first end (6A) in said longitudinal direction.

3. Conveying device according to claim 2, characterised in that said second part is a second semicircular portion (7) of the tube, of substantially semicircular shape, said first part is a first semicircular portion (9) which is also of substantially semicircular shape, smaller than said second semicircular portion (7), the ends of said first semicircular portion (7) being connected to the ends of said second semicircular portion (9) through turnovers (8) formed by turning a part of the tube (5) toward the inner surface thereof.

4. Conveying device according to claim 3, characterised in that a dimension of said second semicircular portion (7) defined between turning positions of said turnovers (8), is approximately equal to a dimension of the said first semicircular portion (9) defined therebetween.

5. Conveying device according to any of claims 2 to 4, said first part (9) being gradually thinner from the first end (6A) to the second end (6B).

6. Conveying device according to any of claims 2 to 5, characterised in that said second part (7) is provided with a shape-retaining member (10).

7. Conveying device according to any of claims 2 to 6, characterised in that both ends of said pipe (1) are formed with a collar-shaped joint (2) and both ends of said tube (5) are formed with a sealing portion (11), said sealing portion (11) being disposed on an inner surface of said collar-shaped joint (2).

8. Conveying device according to claim 1, characterised in that both first part and second part are collapsible and collapse one onto the other, starting from said second end and progressing toward said first end when the fluid is force-fed into said space.

9. Conveying device according to claim 8, characterised in that said tube (105) has a substantial ellipse-shaped cross-section, said first part and second part being two halves of the tube separated by the major axis of said ellipse, said privileged direction being the minor axis of said ellipse.

10. Conveying device according to claim 9, characterised in that the wall of the tube (105) is gradually thinner from the first end (106A) to the second end (106B).

11. Conveying device according to claim 9 or 10, characterised in that the opening (105A) defined by the inner periphery of said tube (105) has an area which gradually decreases from said first end to said second end.

12. Conveying device according to claims 9 and 11, characterised in that the tube has a substantially ellipse-shaped opening (105A) whose minor axis length gradually decreases from said first end to said second end.

13. Conveying device according to any of claims 8 to 12, characterised in that both ends of said pipe (1) are formed with a collar-shaped joint (2) and both ends of said tube (105) are formed with a sealing portion (11), said sealing portion (11) being disposed on an inner surface of said collar-shaped joint (2).
